# FASCICULE DE BREVET EUROPEEN

(11) **EP 2 724 166 B1**
(45) Date de publication et mention de la délivrance du brevet: **30.09.2015**
(21) Numéro de dépôt: 12740074.5
(22) Date de dépôt: 19.06.2012
(51) Int. Cl.: G01P 15/08, G01P 15/093, B60R 21/0132

(54) **DECELEROSTAT PENDULAIRE**
PENDELARTIGER BESCHLEUNIGUNGSMESSER
PENDULAR ACCELEROMETER

(30) Priorité: 21.06.2011 EP 11290282
(43) Date de publication de la demande: 30.04.2014
(73) Titulaire: Siemens S.A.S., 93527 Saint-Denis Cedex (FR)
(72) Inventeur: CONSOLI, Luciano, 75015 Paris (FR)
(74) Mandataire: Maier, Daniel Oliver
(86) Numéro de dépôt international: PCT/EP2012/061743
(87) Numéro de publication internationale: WO 2012/175515

(56) Documents cités:
- DE-A1- 19 923 412
- US-A- 3 908 782
- US-A- 4 159 577

## Description

La présente invention concerne une méthode et un système de mesure d'une variation de vitesse d'un corps mobile en fonction du temps, selon le préambule de la revendication 1.

En particulier, la présente invention se rapporte au domaine des véhicules, notamment des véhicules guidés, nécessitant une mesure sécurisée de leur accélération, comme par exemple les véhicules guidés du domaine ferroviaire. Par « véhicule guidé », il est fait référence aux moyens de transport en commun tels que des bus, trolleybus, tramways, métros, trains ou unités de train, etc., pour lesquels l'aspect sécuritaire est très important. De manière générale, la présente invention s'applique à tout mobile (i.e. à tout corps qui se meut ou qui est mû, comme par exemple un véhicule automobile) contraint à respecter au moins un critère de sécurité d'accélération. Ce critère de sécurité est notamment susceptible de sécuriser ledit mobile lors d'une accélération, par exemple un freinage d'urgence. Par accélération, la présente invention fera référence aux accélérations positives (augmentation de la vitesse en fonction du temps) et aux accélérations négatives ou décélérations (diminution de la vitesse en fonction du temps) du mobile.

Pour nombre de mobiles, en particulier les mobiles permettant le transport de passagers comme par exemple les métros manuels ou automatiques, à roulement fer ou pneu, il est nécessaire de déterminer si l'accélération, positive ou négative, subie par le mobile est supérieure ou non à une valeur seuil d'accélération prédéfinie. Par exemple, afin d'assurer la sécurité d'un véhicule guidé tel un métro, l'accélération de ce dernier lors d'un freinage d'urgence doit impérativement respecter simultanément plusieurs critères de sécurité, dont notamment:
- une valeur de décélération minimale, prise comme hypothèse pour des calculs de distance d'arrêt sécuritaire (typiquement 1,8 m/s²) ;
- une valeur de décélération maximale, au-delà de laquelle les passagers debout à bord du véhicule risquent de chuter (typiquement: -0.32 g, i.e. une décélération de 3,2 m/s² selon la norme ASCE 21, ou encore 3,5 m/s² selon la norme EN 13452).

En règle générale, lorsqu'un ordre de freinage d'urgence est émis, une électrovanne d'un frein d'urgence s'ouvre, ladite ouverture permettant une diminution d'une pression hydraulique ou pneumatique entraînant une activation du frein d'urgence et une augmentation de la décélération du mobile (la vitesse dudit mobile diminue en fonction du temps). Puis lorsque la décélération atteint ou dépasse une valeur seuil prédéterminée, une autre électrovanne, dite électrovanne de limitation du frein d'urgence, se ferme, ladite fermeture entrainant un maintien constant de ladite pression et un maintien sensiblement constant de la décélération. Enfin à l'arrêt du véhicule la décélération s'annule, l'électrovanne de limitation du frein d'urgence s'ouvre et la pression diminue jusqu'à zéro (purge complète).

Le non-respect du premier critère de sécurité (valeur de décélération minimale) est un événement de gravité I considéré comme "catastrophique" au sens de la norme EN-50126 et nécessitant une logique de commande SIL4. Le non-respect du second critère de sécurité (valeur de décélération maximale) est un événement de gravité II considéré comme "critique" ou III considéré comme "marginal" au sens de la norme EN-50126, nécessitant dès lors une logique de commande SIL2. Un autre critère de sécurité est une variation rapide de la décélération dudit mobile lors d'un freinage d'urgence. En effet, un Jerk de l'ordre de 3 à 6 m/s³ doit être respecté lors d'un freinage d'urgence afin d'assurer la sécurité dudit mobile. Ce Jerk implique une méthode et un dispositif de mesure de la variation de la vitesse du mobile en fonction du temps caractérisé par un temps de réponse court. Ainsi, la détection du dépassement d'un niveau de décélération doit être faite avant que la décélération du mobile n'atteigne ce seuil, de façon à donner au système de freinage le temps de réagir.

De nombreuses méthodes et dispositifs de mesure de l'accélération d'un mobile sont connus de l'homme du métier. Certains décéléromètres utilisent par exemple un tube rempli de mercure pour mesurer la décélération du mobile. Ainsi, GB 2 211 942 A décrit un dispositif apte à mesurer une accélération à partir d'une mesure électrique ou optique d'un déplacement d'un fluide, en particulier du mercure, contenu à l'intérieur d'un tube en forme de « U » ou de « O », scellé. Malheureusement, ledit tube est fragile, facilement endommageable et donc susceptible de libérer ledit fluide qui peut notamment se révéler nocif lorsqu'il s'agit de mercure. De plus, de tels décéléromètres ne peuvent généralement qu'indiquer la variation de vitesse du mobile en fonction du temps selon un unique sens de déplacement dudit mobile. Chaque sens de déplacement du mobile doit dès lors être associé à son propre dispositif de mesure de l'accélération. En particulier dans le cas de véhicules guidés caractérisés par deux sens de déplacement, respectivement un déplacement en marche avant et un déplacement en marche arrière, deux décéléromètres sont nécessaires afin de couvrir la mesure de l'accélération dans lesdits deux sens de déplacement.

Un autre dispositif de mesure de l'accélération est décrit dans US 4,849,655. Il s'agit d'un dispositif composé de deux éléments, un premier élément fixe et un second élément ayant un mouvement relatif par rapport audit premier élément. Ces deux éléments sont par exemple respectivement un émetteur de champ magnétique et un capteur d'effet hall. Lors d'une accélération, le mouvement relatif entre les deux éléments produit une variation du champ magnétique qui est détectée par le capteur. Ce dernier produit alors un signal corrélé à la variation de vitesse du mobile. Ce signal est ensuite traité électroniquement afin d'être notamment utilisé pour contrôler un freinage dudit mobile.

D'autres dispositifs sont notamment basés sur une détection et une mesure d'accélération à partir d'un capteur qui change de tension en fonction de son sens de rotation (US 5,659,137), sur un accélérateur angulaire utilisant le mercure comme masse inertielle (US 3,147,391), sur une mesure de déplacement d'une partie d'un pendule immergé dans un liquide (US 5,134,883). Malheureusement, leurs principes de fonctionnement sont généralement complexes, nécessitant par exemple une analyse de signal, et impliquant aussi un coût de fabrication important. D'autre part, ces dispositifs ne sont pas fiables sur une longue durée de fonctionnement, étant sujet à une usure notamment mécanique de leurs pièces constituantes, ainsi que des pièces coopérant à la mesure d'accélération.

D'autres dispositifs, décrits dans les documents DE 199 23 412 A1 et US 3 908 782 A, permettent également de détecter une accélération dépassant un seul prédéfini.

Un but de la présente invention est de proposer un dispositif de mesure d'une variation de la vitesse d'un mobile en fonction du temps qui soit simple, économiquement avantageux (notamment afin de permettre une maintenance, en dehors des vérifications courantes, par simple remplacement dudit dispositif), sûr, fiable, et capable d'établir rapidement ladite mesure de ladite variation de vitesse en fonction du temps (i.e. ayant un temps de réponse court, notamment de l'ordre de 100 à 200 ms).

Un autre but de la présente invention est en particulier de permettre une détermination fiable d'un dépassement d'une valeur seuil d'accélération prédéfinie (valeur limite tolérable) subie par le mobile, indépendamment d'un traitement d'un signal destiné à déterminer ledit dépassement.

Dans ces buts, un dispositif est proposé par le contenu de la revendication 1. Un ensemble de sous-revendications présente également des avantages de l'invention.

La présente invention propose un dispositif de mesure d'une accélération d'un mobile, ledit dispositif de mesure étant destiné à équiper ledit mobile et comprenant:
- un pendule capable d'osciller autour d'un centre instantané de rotation O (i.e. un point autour duquel est capable d'osciller ledit pendule, ou en particulier son centre de masse, à un instant donné par rapport à un référentiel de référence, par exemple ledit mobile, ou un boitier de protection dudit pendule);
- un système de détection capable de détecter une oscillation dudit pendule susceptible de résulter de ladite accélération;
- le pendule a une configuration géométrique permettant sa coopération avec ledit système de détection, ladite configuration géométrique étant telle qu'elle permet uniquement audit système de détection de signaler une oscillation dudit pendule dépassant, ou en particulier franchissant, une valeur seuil d'oscillation, ou autrement dit, ladite configuration géométrique permet au système de détection de générer un signal de détection capable d'indiquer uniquement que ledit pendule subit une accélération dépassant une valeur seuil d'accélération.

Le système de détection selon l'invention peut en particulier comprendre un détecteur disposé perpendiculairement à un plan d'oscillation dudit pendule, et préférentiellement, également perpendiculaire à un axe passant par le centre de masse du pendule au repos (ledit axe étant par exemple aligné sur le champ gravitationnel) et le centre instantané de rotation O. Par plan d'oscillation, il est notamment fait référence au plan dans lequel se déplace le centre de masse dudit pendule lorsque ledit pendule oscille autour dudit centre de rotation O. Ledit système de détection selon l'invention peut également comprendre un émetteur destiné à coopérer avec ledit détecteur. Ledit émetteur et ledit détecteur sont destinés à coopérer l'un avec l'autre afin de générer un signal de détection ne nécessitant aucun traitement afin d'être interprété par un système de freinage, car capable d'indiquer directement si une oscillation dudit pendule dépasse ladite valeur seuil d'oscillation. Par exemple, ledit émetteur est un dispositif générant un faisceau lumineux et le détecteur est un dispositif de détection photoélectrique, ou encore, ledit système de détection est un détecteur de proximité capacitif ou inductif, comprenant un émetteur capable d'émettre un champ magnétique ou électrique susceptible d'interagir avec un objet compris dans le corps dudit pendule, en particulier un objet métallique ou magnétique, et un détecteur est capable de détecter une variation dudit champ magnétique ou respectivement électrique, notamment lors d'une interaction dudit objet avec ledit champ magnétique ou respectivement électrique. D'autres couples émetteur - détecteur seront présentés de manière plus détaillée dans la suite du document.

Ladite configuration géométrique selon l'invention peut en particulier être définie en fonction de la masse du pendule, de la position de son centre de masse par rapport au centre instantané de rotation, de son plan d'oscillation, d'une position du système de détection par rapport audit pendule, afin de garantir que seule une oscillation dépassant une valeur seuil d'oscillation soit détectable par ledit système de détection. De manière préférentielle, ladite configuration géométrique est telle que ledit pendule comprend, à un emplacement dudit pendule destiné à se trouver en vis-à-vis dudit système de détection (en particulier, en vis-à-vis dudit détecteur) lorsque ladite oscillation équivaut à ladite valeur seuil d'oscillation, une interface entre deux milieux, respectivement un premier milieu et un second milieu, seul un des deux milieux étant apte à coopérer avec ledit système de détection afin de signaler ledit dépassement ou franchissement de la valeur seuil d'oscillation. Ledit système de détection est ainsi capable de signaler un passage dudit premier milieu audit second milieu et inversement, et donc tout dépassement ou franchissement d'une valeur seuil d'oscillation, et donc d'une valeur seuil d'accélération correspondant à ladite valeur seuil d'oscillation.

Par interface, il est fait référence à la surface séparant les deux milieux, qui peuvent être solides, liquides ou gazeux. Par milieu, il est fait référence à un ensemble d'éléments physiques capables de constituer un corps (solide, liquide, gazeux) susceptible d'interagir ou respectivement de ne pas interagir avec le système de détection. Par exemple, le premier milieu et le second milieu peuvent chacun être un corps solide, ou encore le premier milieu peut être un corps solide, tandis que le second milieu est un corps gazeux.

Préférentiellement, selon un mode de réalisation particulier, le premier milieu est constitué par une partie non métallique dudit pendule, et le second milieu est constitué par une partie métallique susceptible de remplir le rôle d'émetteur. Ou encore, selon un autre mode de réalisation particulier, le premier milieu pourrait être un matériau solide destiné à former le corps dudit pendule, et le second milieu pourrait être un gaz compris dans ou occupant (par exemple temporairement) un évidement dudit pendule, par exemple une ouverture ou une fenêtre inscrite dans le corps dudit pendule. Avantageusement, ledit détecteur est en particulier capable de détecter un passage dudit premier milieu audit second milieu lorsque ladite oscillation est supérieure ou égale à ladite valeur seuil, ledit passage étant ainsi susceptible de provoquer directement ou indirectement une signalisation par ledit détecteur d'un dépassement d'une valeur seuil d'oscillation. Ledit signal de détection susceptible d'être généré par le détecteur est en particulier caractérisé par deux états, un premier état caractérisable par une première valeur du signal de détection et relatif au non-dépassement de ladite valeur seuil d'oscillation, et un second état caractérisable par une seconde valeur du signal de détection et relatif au dépassement de ladite valeur seuil d'oscillation. Dans ce cas, le système de freinage est en particulier directement activable en fonction de l'état du signal de détection (ou autrement dit de la valeur dudit signal de détection) généré par le détecteur, libre de tout traitement dudit signal de détection. Ladite signalisation correspond dès lors simplement à un changement de l'état dudit signal de détection, qui permet notamment d'activer ou désactiver un système de freinage, ou par exemple une électrovanne de limitation du frein d'urgence.

De manière préférentielle, ladite configuration géométrique selon l'invention est telle que ledit pendule comprend, à un autre emplacement dudit pendule destiné à se trouver en vis-à-vis dudit système de détection lorsque ladite oscillation équivaut à une autre valeur seuil, ladite interface entre lesdits deux milieux. Avantageusement, ledit emplacement et ledit autre emplacement permettent de définir deux valeurs seuils d'oscillations, chacune étant susceptible de déclencher une signalisation, par ledit détecteur, du dépassement de ladite valeur seuil ou de ladite autre valeur seuil d'oscillation, par exemple respectivement pour un sens de déplacement du mobile et un autre sens de déplacement dudit mobile.

En particulier, ledit pendule a une forme symétrique par rapport à un plan de symétrie passant par son centre de masse et le centre instantané de rotation O, ledit plan de symétrie étant perpendiculaire au plan d'oscillation dudit pendule, ledit emplacement et ledit autre emplacement étant équidistants dudit plan de symétrie, et le même milieu s'étendant dudit premier emplacement audit second emplacement. Ledit pendule peut par exemple être un pendule plan ou un pendule tridimensionnel. En particulier, ledit pendule est un corps plan, et ledit même milieu s'étendant dudit premier emplacement audit second emplacement forme une fenêtre dans le corps plan.

De manière préférentielle, ledit système de détection comprend un unique détecteur et un unique émetteur, ladite configuration géométrique permet avantageusement audit système de détection de signaler le dépassement de ladite valeur seuil d'oscillation (destinée par exemple à caractériser une accélération positive) et de ladite autre valeur seuil d'oscillation (destinée par exemple à caractériser une accélération négative).

En outre, le dispositif de mesure selon l'invention est en particulier caractérisé en ce qu'il comprend un frein destiné à amortir le pendule lorsqu'une oscillation dépasse ladite valeur seuil. Ledit frein comprend par exemple une piste de frottement destinée à coopérer avec une surface dudit pendule, ou encore au moins un aimant permanent.

Des exemples de réalisations et d'applications fournis à l'aide des figures suivantes aideront à mieux comprendre la présente invention. Les numéros de référence utilisés dans une figure sont repris de manière cohérente dans les autres figures.
- Figure 1: exemple de réalisation selon l'invention d'un dispositif de mesure de l'accélération accouplable à un véhicule (1A vue de face; 1B vue de dessus).
- Figure 2: exemple de réalisation d'une première configuration géométrique du pendule selon l'invention.
- Figure 3: exemple de réalisation selon l'invention d'un frein du dispositif selon l'invention.
- Figure 4: illustration du fonctionnement d'un système de détection selon l'invention.
- Figures 5: exemple de réalisation d'une autre configuration géométrique du pendule selon l'invention.
- Figures 6: illustration d'une détection d'un dépassement d'un seuil d'oscillation pour ladite autre configuration géométrique du pendule selon l'invention.
- Figures 7: exemple de réalisation selon l'invention d'un frein comprenant un aimant permanent, et interaction dudit frein avec le pendule au repos.
- Figures 8: exemple de réalisation selon l'invention d'un frein comprenant un aimant permanent et interaction dudit frein avec le pendule en mouvement.
- Figure 9: exemple de réalisations du dispositif selon l'invention permettant un réglage d'un seuil d'accélération destiné à être détecté par le dispositif selon l'invention.
- Figure 10: exemple de réalisation selon l'invention d'un dispositif de mesure d'une accélération comprenant des systèmes de détection redondants.

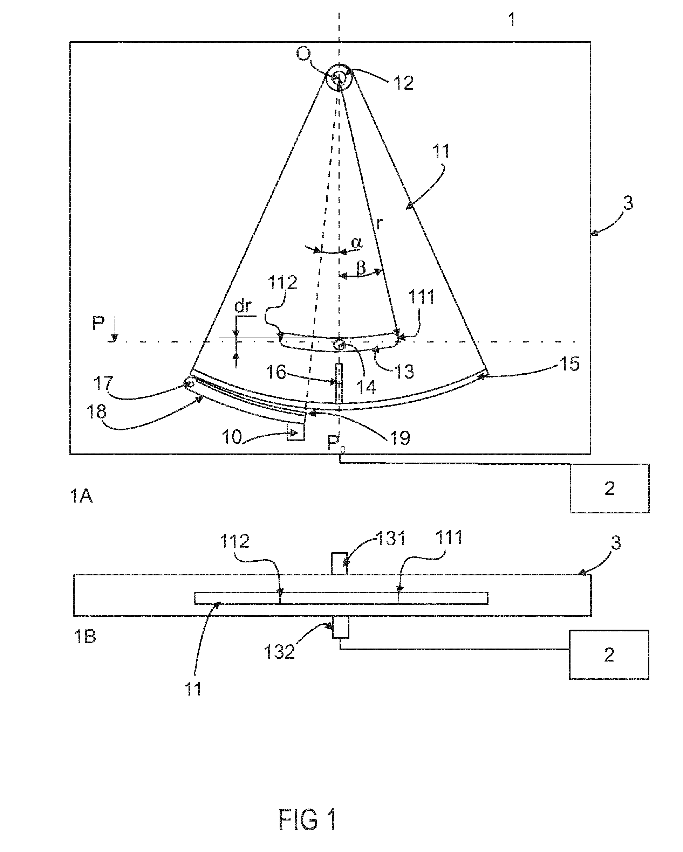

A titre d'exemple, la figure 1 montre un dispositif 1 de mesure d'une accélération, ledit dispositif 1 étant destiné à équiper un mobile afin de déterminer si une accélération dudit mobile dépasse au moins une valeur seuil d'accélération. La figure 1A présente une vue de face dudit dispositif 1, tandis que la figure 1B présente une vue de dessus dudit dispositif 1, selon la coupe P. Ledit dispositif 1 de mesure selon l'invention comprend:
- un pendule 11 capable d'osciller autour d'un centre instantané de rotation O, ledit pendule 11 pouvant en particulier tourner autour d'une rotule 12 susceptible de comprendre ledit centre instantané de rotation O;
- un système de détection comprenant en particulier un émetteur 131 et un détecteur 132, ledit système de détection étant capable de détecter une oscillation dudit pendule 11 susceptible de résulter de ladite accélération;
et étant caractérisé en ce que
- le pendule 11 a une configuration géométrique permettant sa coopération avec ledit système de détection, ladite configuration géométrique étant telle qu'elle permet audit système de détection, en particulier audit détecteur 132, de générer un signal de détection capable de signaler uniquement une oscillation dudit pendule 11 dépassant ou franchissant une valeur seuil, ou autrement dit, que ledit pendule 11 subit une accélération dépassant une valeur seuil d'accélération.

En particulier, le dispositif 1 peut être accouplé à un véhicule, en étant par exemple fixé à un plancher horizontal dudit véhicule et connecté à un système de freinage 2 dudit véhicule. Préférentiellement, le détecteur 132 du système de détection peut être directement connecté audit système de freinage 2. Avantageusement, le dispositif 1 selon l'invention permet d'identifier de manière rapide, sûre et fiable un dépassement d'une valeur seuil, en particulier prédéfinie, d'accélération dudit véhicule, que ce soit un véhicule ferroviaire, un métro/tramway en roue en fer ou pneumatique, et de limiter ladite accélération en transmettant ledit signal de détection audit système de freinage 2. Ledit signal de détection peut par exemple être transmis soit directement dans des réseaux pneumatiques, hydrauliques, ou électriques du véhicule, soit à une unité centrale de contrôle du freinage, ou encore soit à une unité générale de contrôle du véhicule, comme par exemple une unité de contrôle d'un train automatique capable de gérer ledit système de freinage.

De manière préférentielle, ladite configuration géométrique dudit pendule 11 est telle que ledit pendule 11 comprend, à un emplacement 111 destiné à se trouver en vis-à-vis dudit détecteur 132 lorsque ladite oscillation équivaut à ladite valeur seuil d'oscillation, une interface entre deux milieux, respectivement un premier milieu et un second milieu, seul un des deux milieux étant apte à coopérer avec ledit système de détection afin que ledit signal de détection signale uniquement un franchissement d'une valeur seuil d'oscillation, ou autrement dit d'accélération. En particulier, ledit pendule comprend, à un autre emplacement 112 destiné à se trouver en vis-à-vis dudit détecteur 132 lorsque ladite oscillation équivaut à une autre valeur seuil, ladite interface entre lesdits deux milieux. Par exemple, ledit premier milieu est formé par un corps opaque constituant le corps du pendule 2 et entourant une fenêtre 13 pratiquée dans ledit corps dudit pendule 11, et le second milieu 2 est un gaz pouvant occuper ladite fenêtre 13 et entourant le corps dudit pendule 11, par exemple de l'azote remplissant ledit boitier 3 de protection étanche dudit pendule. Ladite fenêtre 13 s'étend en particulier dudit premier emplacement 111 audit autre emplacement 112. Dans ce cas, ledit émetteur 131 est préférentiellement un dispositif capable d'émettre un faisceau lumineux 14 capable de traverser ladite fenêtre pour être détecté par ledit détecteur 132 tant que l'oscillation dudit pendule est inférieure à ladite valeur seuil d'oscillation, ledit corps opaque étant apte à arrêter ledit faisceau lumineux 14 dès que ladite oscillation dudit pendule est supérieure ou égale à ladite valeur seuil d'oscillation. Ainsi, le passage dudit second milieu audit premier milieu est détectable par ledit détecteur 132 uniquement lorsqu'une oscillation dudit pendule dépasse au moins une valeur seuil d'oscillation.

Par oscillation dudit pendule, il est en particulier fait référence au mouvement de balancier dudit pendule lorsque ce dernier quitte une position d'équilibre au repos P₀, ledit mouvement étant caractérisable à tout instant par un angle d'inclinaison dudit pendule exprimable en degré ou radians et formé entre une droite passant par le centre instantané de rotation et le centre de masse dudit pendule lorsque ce dernier est au repos, et ladite même droite lorsque ledit pendule est en mouvement (un mouvement à 1 degré de liberté est considéré). Ledit angle d'inclinaison caractérise ainsi l'écart dudit pendule de sa position d'équilibre au repos. Pour chaque valeur seuil d'accélération devant être détectée par ledit dispositif 1 est calculée en fonction des caractéristiques physiques du pendule une valeur seuil d'oscillation exprimable en degré ou radians: ladite valeur seuil d'oscillation est ainsi un angle limite d'inclinaison, comme par exemple l'angle β, définissant un écart particulier dudit pendule de sa position d'équilibre. Par dépassement de la valeur seuil d'oscillation, il est fait référence au passage d'une oscillation dudit pendule caractérisée par un angle d'inclinaison ayant une valeur inférieure, respectivement supérieure, audit angle limite, à une oscillation caractérisée par un angle d'inclinaison ayant une valeur supérieure, respectivement inférieure, audit angle limite. Le dépassement d'une valeur seuil d'oscillation fait ainsi référence au franchissement par le pendule d'un angle limite d'inclinaison.

La configuration géométrique selon l'invention fait quant à elle en particulier référence à une forme géométrique particulière dudit pendule et/ou à une disposition d'un élément dudit pendule audit emplacement ou audit autre emplacement, ladite forme et/ou ledit élément permettant audit système de détection de détecter uniquement une oscillation dépassant ladite valeur seuil d'oscillation. La forme géométrique particulière ou ledit élément peuvent par exemple être ladite fenêtre pratiquée dans le corps dudit pendule et dont les dimensions et la position en fonction dudit emplacement et/ou dudit autre emplacement permettent uniquement la détection d'une oscillation dépassant ladite valeur seuil d'oscillation et/ou ladite autre valeur seuil d'oscillation.

De manière préférentielle, ledit dispositif 1 selon l'invention comprend une piste de frottement 15 et un aimant 16 positionné fixement dans le corps dudit pendule 11, ladite piste de frottement 15 et ledit aimant 16 étant destinés à coopérer avec un frein 18 mobile autour d'une rotule 17, ladite rotule du frein 18 étant notamment fixée sur une même base que la rotule 12 du pendule 11 et ledit frein 18 étant susceptible de reposer sur un support 10 et de comprendre une piste de frottement 19 faisant face à la piste de frottement 15 dudit pendule 11. En particulier, ledit frein 18 est constitué de matière métallique et ledit aimant 16 est capable d'exercer sur ledit frein 18 une force magnétique capable de mettre ledit frein 18, en particulier sa piste de frottement 19, en contact avec la piste de frottement 15 dudit pendule 11.

Selon un mode de réalisation préférentiel, ledit pendule 11 est par exemple un pendule plan, en matière opaque, en forme de secteur circulaire, pouvant être enfermé dans ledit boitier 3 fixable à un mobile et permettant une oscillation dudit pendule autour d'une rotule 12 positionnée au sommet dudit secteur circulaire et comprenant le centre instantané de rotation O, ledit pendule 11 comprenant en outre une piste de frottement 15 disposée à l'extrémité dudit secteur circulaire, le long de son arc de courbe, en vis-à-vis du frein 18, et un aimant 16 positionné dans le prolongement d'une droite passant par le centre de masse dudit secteur circulaire et le centre de rotation instantané O, à proximité de ladite piste de frottement, ledit aimant 16 étant capable d'interagir magnétiquement avec ledit frein 18 dès que ledit pendule s'écarte d'un angle α de sa position d'équilibre P₀. L'interaction magnétique dudit frein 18 avec ledit aimant 16 permet en particulier une mise en contact de la piste de frottement 19 dudit frein 18 avec la piste de frottement 15 dudit pendule 11 dès que ledit pendule s'écarte au moins dudit angle α de ladite position d'équilibre P₀. Préférentiellement, ledit pendule 11 comprend en outre une fenêtre 13, i.e. une ouverture pratiquée dans le corps dudit pendule 11, ladite fenêtre étant occupée par un gaz compris dans ledit boitier 3 (par exemple de l'air, ou un gaz neutre), ladite fenêtre étant de plus symétrique par rapport à ladite droite passant par ledit centre de masse et ledit centre instantané de rotation O, s'étendant en forme d'arc de cercle d'un premier emplacement 111 à un autre emplacement 112, chacun desdits emplacements étant situé à une égale distance r dudit centre instantané de rotation O, la longueur de la fenêtre, i.e. la longueur de la courbe reliant ledit emplacement audit autre emplacement étant dès lors sensiblement égale à 2rβ, avec β exprimé en radians, et la largeur radiale de ladite fenêtre étant égale à dr, dr étant en particulier supérieur ou égal à la taille du faisceau 14 au niveau de ladite fenêtre, dr étant par exemple égal à 2 mm.

Ledit angle α est en particulier calculé en fonction d'une pente maximale d'une piste sur laquelle un mobile équipé du dispositif selon l'invention est susceptible de se déplacer, de sorte que ledit aimant 16 n'interagisse pas avec ledit frein 18 lorsque le mobile se déplace à vitesse constante ou est en position de repos sur la portion de ladite piste ayant ladite pente maximale. De cette façon, une hystérésis de départ est avantageusement évitée: en effet, l'angle α garantit que la droite passant par le centre de masse et le centre instantané de rotation O dudit pendule 11 soit alignée sur le champ gravitationnel lorsque la vitesse dudit mobile est constante ou nulle, et non légèrement inclinée par rapport au champ gravitationnel sous l'effet d'une force de frottement résultant du contact de la piste de frottement 15 du pendule 11 avec la piste de frottement 19 du frein 18.

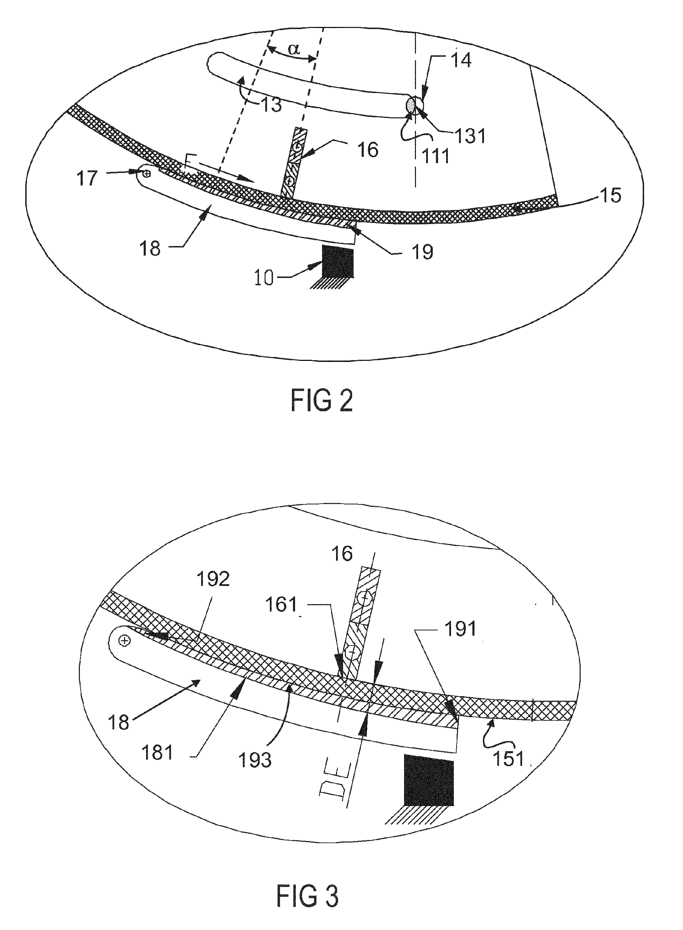

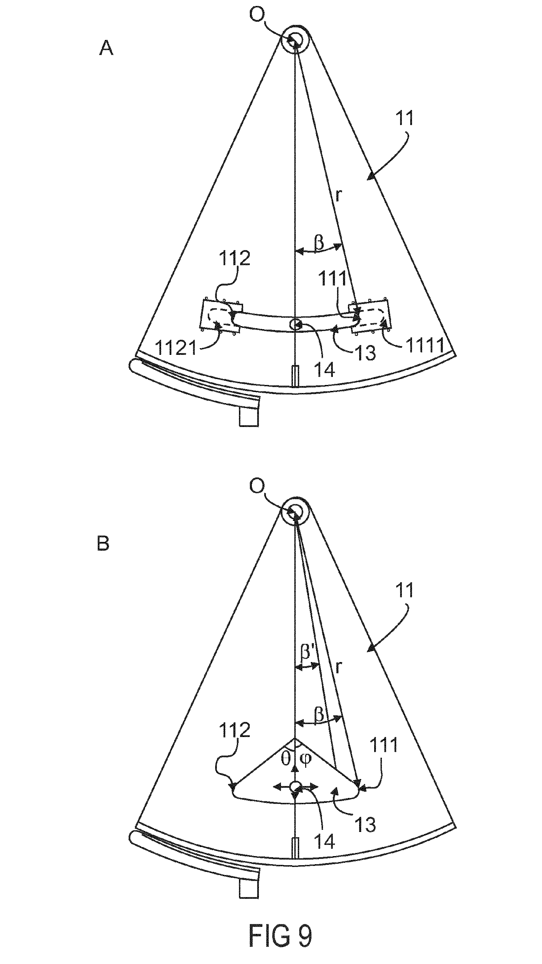

Les figures 2 à 8 illustrent une utilisation du dispositif selon l'invention pour un mobile en déplacement, ledit dispositif selon l'invention étant destiné à équiper ledit mobile, et permettant d'identifier et de signaler d'une manière rapide, sûre et fiable un dépassement d'un niveau d'accélération dudit mobile, et de limiter ladite accélération en commandant directement un système de freinage, soit dans un réseau pneumatique, hydraulique, ou électrique, soit en transmettant un signal de détection à un dispositif de contrôle du freinage (« Braking Control Unity ») ou de commande du mobile, comme par exemple à un « Automatic Train Control » si ledit mobile est un train. Le dispositif proposé par la présente invention est en particulier capable de maintenir une accélération inférieure ou égale à une valeur seuil d'accélération d'environ -2m/s², ladite valeur seuil pouvant notamment être ajustée, par exemple par réglage d'une ouverture d'une fenêtre apte à laisser passer ledit faisceau (se référer à la Fig. 9 pour plus de détails). Lorsque ladite valeur seuil est atteinte, un contact est fermé (ou ouvert suivant la logique du dispositif selon l'invention) et un signal (analogique ou digital) est envoyé audit système de freinage en charge de la régulation du freinage du mobile. Les figures 2 à 8 décrivant l'utilisation du dispositif selon l'invention dans ledit mobile reprennent les mêmes références que celles utilisées pour la figure 1 pour chaque même objet ou pour chaque objet équivalent.

Supposons que le dispositif selon l'invention tel que décrit en Fig. 1 soit fixé dans un mobile, de sorte que la droite passant par le centre instantané de rotation O et le centre de masse du pendule soit perpendiculaire à un plan horizontal sur lequel ledit mobile repose, tout en étant alignée avec le champ gravitationnel tant que ledit mobile est au repos ou se déplace à vitesse constante sur ledit plan horizontal.

Tant que ledit mobile équipé dudit dispositif selon l'invention se déplace à vitesse constante sur ledit plan horizontal, ladite droite reste alignée avec le champ gravitationnel, i.e. perpendiculaire audit plan horizontal. En cas de décélération dudit mobile (cf. Fig. 2), une force due à ladite décélération s'exerce sur le centre de masse dudit pendule, l'écartant de sa position d'équilibre par rotation autour de son centre instantané de rotation O. Dès que ledit écartement est égal audit angle α, le champ magnétique de l'aimant 16 est capable de tracter le frein 18 qui est par exemple constitué de matériel métallique. Dès lors, les pistes de frottement du pendule 15 et du frein 19 entrent en contact l'une avec l'autre. Du frottement de la piste de frottement 15 du pendule 11 avec la piste de frottement 19 du frein 18 résulte une force tangentielle F opposée au sens de déplacement dudit pendule 11. Les caractéristiques physiques et géométriques des pistes de frottements sont choisies telles que la force F ne soit pas suffisante pour arrêter le mouvement rotatoire du pendule (pour plus de détails, se reporter à la Fig. 3). Le pendule continuera donc à tourner jusqu'à ce qu'un bord de sa fenêtre 13, ledit bord étant positionné sur ledit pendule 11 à l'emplacement 111, occulte le faisceau 14. Avantageusement, tout passage d'un milieu gazeux apte à transmettre ledit faisceau et occupant ladite fenêtre à un milieu solide opaque constituant le corps dudit pendule et apte à arrêter ledit faisceau 14, ainsi que tout passage dudit milieu solide audit milieu gazeux, est détectable par le détecteur 132 du système de détection selon l'invention. Ainsi, le dispositif selon l'invention est capable de corréler directement l'occultation du faisceau 14 par le corps solide dudit pendule à une variation dudit signal de détection, ladite variation ne nécessitant aucun traitement électronique afin de signaler au système de freinage 2 ledit dépassement de ladite valeur seuil d'oscillation ou d'accélération. Par exemple, ledit signal de détection permet directement de fermer une électrovanne de limitation de freinage capable de stopper l'augmentation dudit freinage lorsqu'elle est fermée. Tant que la décélération dudit mobile sera supérieure à la valeur seuil d'accélération préétablie, ledit faisceau 14 sera occulté par le corps dudit pendule 11, et le détecteur 132 transmettra un signal de détection corrélé à ce dépassement du seuil d'accélération. Dès que la décélération diminue, la force résultant de ladite décélération, exercée sur le centre de masse dudit pendule 11, diminue proportionnellement, permettant au pendule un mouvement tendant à le faire regagner sa position d'équilibre. Dès que l'accélération a atteint une valeur inférieure audit seuil d'accélération, la fenêtre 13 dudit pendule se trouve en vis-à-vis dudit faisceau 14 qui peut être détecté par le détecteur 132 qui est par exemple susceptible de commander directement la fermeture de l'électrovanne de limitation de freinage. Préférentiellement, un second frein identique audit frein 18 peut être disposé symétriquement audit frein 18 par rapport à une droite passant par ledit centre instantané de rotation O et le centre de masse dudit pendule lorsque ce dernier est au repos, afin notamment de permettre la détection dudit dépassement d'une valeur seuil d'oscillation dans deux sens de marche dudit mobile.

La figure 3 présente une vue plus détaillée de la piste de frottement 15 du pendule 11 et de la piste de frottement 19 du frein 18. La force tangentielle F résultant du contact des deux pistes de frottement est essentiellement destinée à amortir un mouvement pendulaire dudit pendule susceptible de provoquer une séquence d'oscillations lors de l'occultation du faisceau 14. Ladite force tangentielle F est égale au coefficient de frottement de la piste de frottement 15 du pendule 11 contre la piste de frottement 19 du frein 18, multiplié par la force de contact desdites pistes de frottement 15, 19. Cette force de contact est calculable en fonction des caractéristiques physiques de l'aimant 16 et du frein 18, i.e. le volume de l'aimant 16, sa surface exposée 161, son champ magnétique; le volume et la surface exposée 181 d'une partie métallique du frein 18; et finalement la distance entre la surface exposée 161 de l'aimant 16 et la surface exposée 181 du frein 18. Avantageusement, les pistes de frottement 15, 19 du pendule 11 et du frein 18 sont constituées de matériaux non-ferromagnétiques comme par exemple de l'inox ou de la céramique, afin d'éviter leur magnétisation.

Préférentiellement, la distance DE entre la surface exposée 161 de l'aimant 16 et la surface exposée 181 de la partie métallique (ferromagnétique) du frein 18 varie, en particulier diminue, avec l'augmentation de l'angle caractérisant l'écartement dudit pendule de sa position d'équilibre. A cette fin, ledit frein 18 a par exemple une forme de tige courbe capable d'épouser la courbure de l'arc de courbe d'un pendule en forme de secteur circulaire, l'extrémité 192 dudit frein 18 qui est la plus éloignée du centre de masse dudit pendule 11 étant maintenue par une rotule 17 permettant une rotation libre dudit frein 18, et l'autre extrémité 191 dudit frein 18 étant libre, et susceptible d'être supportée par un support 10 garantissant une faible distance entre la surface exposée 181 de la partie métallique (ferromagnétique) du frein 18 et la surface exposée 161 de l'aimant 16. En particulier, ledit frein 18 est constitué d'au moins deux matériaux: un matériau non ferromagnétique formant une couche d'épaisseur variable destinée à former ladite piste de frottement 19, et recouvrant un matériau métallique destiné à interagir avec ledit aimant 16. Préférentiellement, l'épaisseur de ladite couche, ou autrement dit, l'épaisseur de la piste de frottement 19 du frein 18 diminue continuellement depuis ladite autre extrémité 191 jusqu'à ladite extrémité 192 afin que la force d'interaction entre l'aimant 16 et la partie métallique dudit frein 18 augmente lorsque le pendule 11 s'écarte de sa position d'équilibre. La surface 151 de la piste de frottement 15 du pendule 11 et la surface 193 de la piste de frottement 19 du frein 18 ont en particulier le même rayon de courbure de façon à garder un contact uniforme et à réduire un frottement localisé, donc, une usure desdites pistes de frottement. Finalement, la partie dudit frein 18 proche de la rotule 17 est chanfreinée de façon à garantir qu'en position de repos (i.e. frein reposant sur le support 10), un écart est maintenu entre lesdites deux pistes de frottement 15, 19. Ainsi, la présente invention propose en particulier un contrôle de la force tangentielle F par variation de l'épaisseur de la piste de frottement 19 du frein 18. Avantageusement, un profil de variation de l'épaisseur de ladite piste de frottement 19 dudit frein 18 peut être déduit de mesures d'accélérations réelles d'un mobile et adapté afin de filtrer au mieux des accélérations s'approchant dudit seuil d'accélération. Bien évidemment, la présente invention ne se restreint pas au mode de réalisation préférentiel décrit précédemment, et l'homme du métier saura notamment adapter ce mode de réalisation préférentiel à différentes formes de pendules 11, différentes dispositions ou formes de frein 18. En particulier, différentes coopérations pendule - système de détection peuvent être envisagées en fonction de la configuration géométrique dudit pendule.

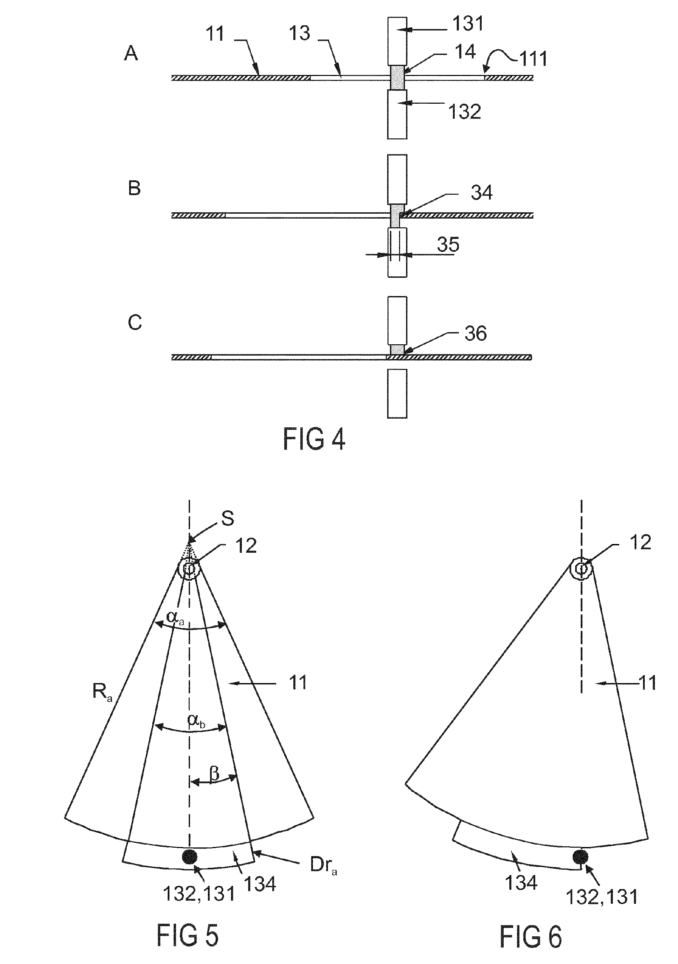

En particulier, selon un premier mode particulier de réalisation du dispositif selon l'invention, le système de détection selon l'invention comprend un émetteur capable d'émettre un faisceau lumineux destiné à être détecté par ledit détecteur, ledit émetteur étant positionné en vis-à-vis dudit détecteur et fixe par rapport à ce dernier, ledit pendule 11 étant susceptible d'osciller dans un espace séparant ledit détecteur dudit émetteur. Dans ce premier mode de réalisation, ledit pendule a une configuration géométrique permettant,
- selon une première variante, une occultation dudit faisceau 14 lumineux uniquement lorsque ledit pendule s'écarte dudit angle β de sa position d'équilibre, ledit faisceau 14 étant ainsi arrêté par le corps dudit pendule 11 avant qu'il n'atteigne le détecteur 132 du système de détection (cf. Fig. 1 et Fig. 4: cas du pendule comprenant une fenêtre pratiquée dans son corps);
- selon une seconde variante, un libre passage audit faisceau 14 de l'émetteur 131 jusqu'audit détecteur 132, uniquement lorsque ledit pendule s'écarte dudit angle β de sa position d'équilibre, ledit faisceau étant arrêté par le corps dudit pendule 11 tant que l'angle caractérisant l'écart dudit pendule 11 de sa position d'équilibre est inférieur audit angle β (cf. Fig. 5). Le corps dudit pendule 11 est par exemple un corps plan tel que présenté en Fig. 5 dont la forme géométrique est le résultat d'une réunion au sens mathématique d'un premier secteur circulaire de sommet S, de rayon Rₐ et d'angle au sommet α₃, avec un second secteur circulaire de même sommet S, de rayon Rₐ + Drₐ, Drₐ > 0 et dimensionné pour occulter ledit faisceau 14, et d'angle au sommet α_{b} ≤ αₐ, avec l'angle α_{b} = 2β, le centre de masse du secteur circulaire d'angle au sommet αₐ et le centre de masse du secteur circulaire d'angle au sommet α_{b} étant positionnés sur un même segment de droite issu dudit sommet S (les secteurs circulaires sont supposés avoir une masse homogène).

Selon ce premier mode particulier de réalisation, ledit émetteur 131 est par exemple une LED (Light Emission Diode), et le détecteur 132 peut être un détecteur de proximité photoélectrique capable de réagir à une variation de quantité de lumière reçue. Pour la première variante, c'est le passage d'un milieu apte à transmettre ledit faisceau 14 a un milieu apte à arrêter ledit faisceau 14 lorsque l'écartement dudit pendule 11 de sa position d'équilibre est égale à l'angle β, qui permet la détection d'un dépassement d'un seuil d'accélération, et inversement pour ladite seconde variante. Avantageusement, la réalisation de la présente invention selon la première variante dudit premier mode particulier de réalisation permet d'augmenter la sécurité du système de détection. En effet, dans ce cas, une panne de l'émetteur 131 peut être interprétée par le système de détection comme un dépassement d'un seuil d'accélération, alors que le système de freinage du mobile ne sera pas actif. Une telle panne peut dès lors facilement être détectée et réparée.

La figure 4 présente de manière détaillée le fonctionnement du dispositif selon l'invention dans le cas de la première variante selon ledit premier mode particulier de réalisation. Que ce soit un faisceau 14 lumineux ou, comme nous le verrons par la suite, un capteur inductif/capacitif (cf. Fig. 5 et 6), l'exact moment du changement d'état du signal de détection se produisant en particulier lors du passage d'un bord de la fenêtre 13 (ledit bord étant situé à l'emplacement 111) devant ledit détecteur 132, ou respectivement lors du passage d'un milieu conducteur d'électricité à un milieu non conducteur d'électricité devant ledit détecteur 132 (l'interface entre lesdits milieux étant situé audit emplacement 111) est avantageusement pris en compte par la présente invention afin d'éviter tout effet d'hystérésis entre le changement d'état (p. ex. 0-1 et 1-0) du signal de détection. Par exemple, la Fig. 4A illustre la présente invention dans le cas où le faisceau 14 n'est pas occulté par le corps du pendule 11 et traverse ainsi librement la fenêtre 13 ouverte dans ledit corps du pendule 11. La Fig. 4B présente le cas où le faisceau 14 est partiellement occulté, de sorte qu'un faisceau partiel 34 de diamètre et donc d'intensité inférieure audit faisceau 14 est susceptible d'atteindre ledit détecteur 132. Dans ce cas, le faisceau partiel 34 illumine une surface 35 d'un photodétecteur du détecteur 132 inférieure à la surface pouvant être illuminée par le faisceau 14 lorsque ce dernier n'est pas occulté. La présente invention comprend préférentiellement un réglage d'un seuil de détection, i.e. un seuil d'intensité lumineuse apte à être détecté par le détecteur 132, de sorte que le changement d'état dudit signal de détection ait lieu entre le début de l'occultation partielle du faisceau 14 et son occultation totale tel que présenté en Fig. 4C. Lors de l'occultation totale du faisceau 14, ce dernier illumine une surface 36 du corps du pendule 11.

Selon un second mode particulier de réalisation du dispositif selon l'invention pouvant être illustré par la figure 5, ledit système de détection est un détecteur de proximité inductif comprenant un émetteur 131 capable de générer et d'émettre un champ magnétique susceptible d'interagir avec un objet conducteur d'électricité ou apte à interagir avec un champ magnétique, et un détecteur 132 capable de détecter une variation dudit champ magnétique, résultant notamment de l'interaction dudit champ magnétique avec ledit objet. Selon ce second mode particulier de réalisation, ledit détecteur 132 est capable de générer un signal de détection dont la valeur, ou préférentiellement l'état, dépend de la présence dudit objet et de son interaction avec ledit champ magnétique dudit émetteur 131. Préférentiellement, le corps dudit pendule comprend ledit objet et la position dudit objet dans le corps dudit pendule permet au détecteur 132 de détecter corrélativement des oscillations dudit pendule dépassant une valeur seuil. Ainsi, dans ce second mode particulier de réalisation, la configuration géométrique du pendule permet un passage d'un milieu conducteur d'électricité, ou de manière générale apte à interagir avec le champ magnétique (le ou les éléments physiques constituant ledit objet forment ledit milieu conducteur d'électricité ou de manière générale, apte à interagir avec le champ magnétique), à un milieu non conducteur d'électricité, ou de manière générale inapte à interagir avec ledit champ magnétique, uniquement lorsqu'une oscillation dudit pendule dépasse ladite valeur seuil d'oscillation, provoquant automatiquement un changement de la valeur, ou préférentiellement de l'état, dudit signal de détection.

Pour ce second mode particulier de réalisation et selon une première variante, le corps dudit pendule peut notamment avoir la forme géométrique décrite en figure 5, ledit objet occupant une surface 134 dudit second secteur circulaire, ladite surface 134 étant constituée de l'ensemble des points dudit second secteur circulaire situés à une distance Rₓ ≥ Rₐ dudit sommet S. Ladite surface 134 a ainsi une forme de secteur de couronne circulaire donc la longueur est sensiblement égale à (Rₐ + Dr₃) · β. Tant qu'un mobile équipé dudit dispositif réalisé selon ledit second mode particulier présenté ci-dessus se déplace à vitesse constante, le détecteur 132 détecte la présence de la surface 134 et génère un signal de détection caractérisé par une première valeur. Lors d'un freinage du mobile équipé dudit dispositif selon l'invention, le pendule 11 pivote autour de sa rotule 12 comme illustré en Fig. 6. Si la décélération dudit mobile dépasse une valeur seuil, la surface 134 sort du champ de détection du détecteur 132 et provoque la génération d'un signal de détection caractérisé par une seconde valeur, ladite seconde valeur étant apte à déclencher une diminution du freinage dudit véhicule. Selon une seconde variante, le corps dudit pendule pourrait avoir la forme géométrique décrite en figure 1, ledit objet prenant place dans le corps dudit pendule, de part et d'autre de ladite fenêtre, dans le prolongement selon la longueur de ladite fenêtre, en gardant la même courbure et la même largeur radiale dr que ladite fenêtre.

Selon un troisième mode particulier de réalisation du dispositif selon l'invention, le système de détection est un détecteur de proximité capacitif comprenant un émetteur 131 capable d'émettre un champ électrique alternatif et un détecteur 132 capable de détecter une variation d'une capacité d'un condensateur dudit système de détection, ladite variation étant susceptible de résulter de l'interaction dudit champ électrique alternatif avec au moins une partie du corps dudit pendule 11. A cette fin, le corps dudit pendule a en particulier et selon une première variante, la forme géométrique telle que décrite en Fig. 1, et selon une seconde variante, la forme géométrique décrite en Fig. 5. Le principe de fonctionnement du dispositif selon l'invention selon ce troisième mode particulier de réalisation est préférentiellement similaire, voire identique, au principe de fonctionnement du dispositif selon le second mode particulier de réalisation, ledit détecteur 132 étant capable de détecter tout objet interagissant avec ledit champ électrique alternatif émis par ledit émetteur 131, ladite interaction résultant en ladite variation de la capacité dudit condensateur dudit système de détection de proximité capacitif.

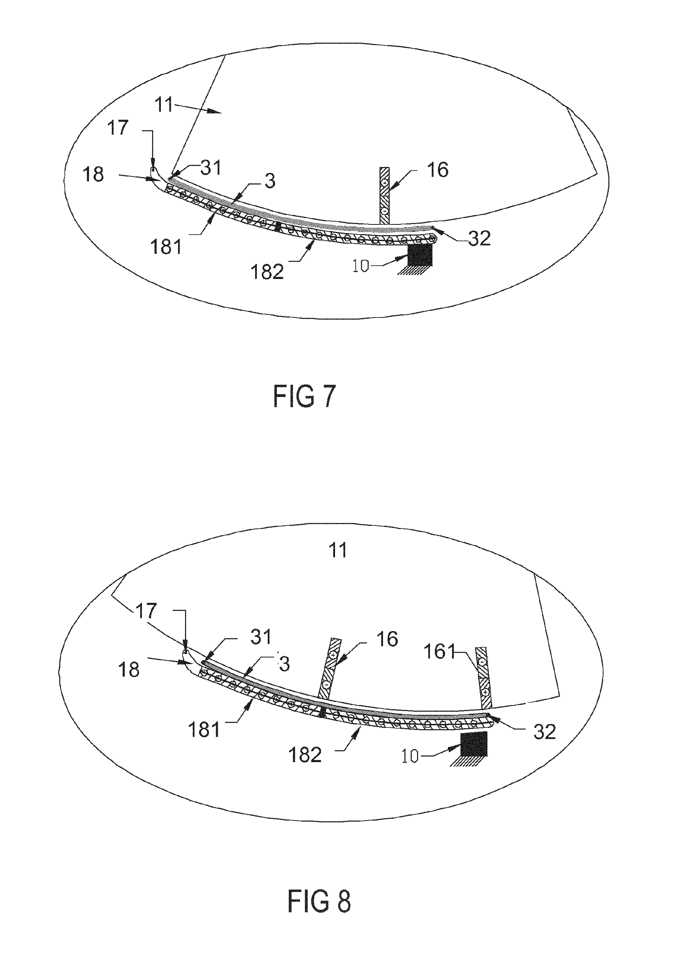

Les figures 7 et 8 présentent un quatrième mode particulier de réalisation du dispositif selon l'invention, dans lequel le corps dudit pendule 11 comprend au moins un aimant 16 (ou en particulier deux aimants 16, 161) capable d'interagir avec un frein 18 mobile autour d'une rotule 17, ledit frein 18 étant configuré afin d'être repoussé par le champ magnétique dudit aimant 16 lorsque ledit pendule est au repos (Fig. 7), et pour être attiré par ledit champ magnétique dudit aimant 16 uniquement lorsqu'une oscillation dudit pendule dépasse une valeur seuil d'oscillation (cf. Fig. 8), l'attraction dudit frein 18 par le champ magnétique dudit aimant 16 étant apte à provoquer un contact électrique entre la piste de frottement 19 dudit frein 18 et la piste de frottement 15 dudit pendule 11 (cf. Fig. 2 ou 3, lesdites pistes de frottement 15 , 19 étant conductrices dans ce quatrième mode particulier de réalisation), ou selon une variante préférentielle entre ledit frein et une tige métallique 3 courbe disposée en particulier entre ledit frein 18 et le corps dudit pendule 11 (cf. Fig. 7 et 8), ledit contact électrique étant susceptible de fermer un circuit électrique connecté à un système de freinage, activant par exemple une électrovanne de limitation de freinage. Selon ce quatrième mode particulier de réalisation, ledit frein 18 est ainsi un switch de déclenchement magnétique capable de détecter une oscillation du pendule (agissant ainsi en détecteur) et de commander une activation ou désactivation d'un système de freinage, par exemple capable de commander une électrovanne de limitation de freinage, en fonction d'un dépassement d'une valeur seuil d'accélération. Avantageusement, ledit frein 18 peut interagir magnétiquement avec ledit pendule, notamment de façon à amortir son mouvement. Selon ce quatrième mode de réalisation, ladite configuration géométrique du pendule est telle que ledit pendule comprend, à un emplacement dudit pendule destiné à se trouver en vis-à-vis dudit système de détection, i.e. dudit frein, lorsque ladite oscillation équivaut à ladite valeur seuil d'oscillation, une interface entre deux milieux, respectivement un premier milieu non aimanté et un second milieu aimanté capable d'agir en tant qu'émetteur de champ magnétique, seul un des deux milieux (i.e. le milieu aimanté) étant apte à coopérer avec ledit système de détection afin de générer un signal de détection capable de signaler uniquement ledit dépassement de ladite valeur seuil d'oscillation.

De manière préférentielle, le corps dudit pendule 11 a une forme de secteur circulaire mobile autour d'une rotule 12 positionnée au sommet dudit secteur circulaire. Ledit aimant 16 peut en particulier être noyé dans ledit corps dudit pendule 11 et positionné au milieu de l'arc de courbe dudit pendule. Le frein 18 comprend en particulier deux parties aimantées, respectivement une première partie 181 et une seconde partie 182, lesdites parties étant disposées de façon à ce que l'orientation du champ magnétique de la première partie est l'inverse de l'orientation du champ magnétique de ladite seconde partie. Selon ladite variante préférentielle, ladite tige métallique 3 est en particulier une tige longiligne courbe positionnée sous l'arc de courbe dudit pendule 11, dont la forme est apte à épouser la forme de l'arc de courbe dudit pendule tout en garantissant un mouvement dudit pendule 11 libre de contact avec ladite tige métallique 3. Cette dernière est préférentiellement maintenue fixe à ses deux extrémités 31, 32 par des fixations permettant une conduction électrique. Sous ladite tige métallique 3, en vis-à-vis de l'arc de courbe dudit pendule 11, maintenu mobile par ladite rotule 17 est disposé ledit frein 18 de longueur et de courbure sensiblement identiques à celles de ladite tige métallique 3.

Préférentiellement, lorsque ledit pendule 11 est au repos, ledit aimant 16 est en vis-à-vis de ladite seconde partie 182, l'orientation des champs magnétiques dudit aimant 16 et de ladite seconde partie 182 étant opposés l'un à l'autre afin que ledit aimant 16 et ladite seconde partie 182 se repoussent mutuellement. Ledit frein 18 est ainsi repoussé contre son support 10, laissant libre de contact les pistes de frottement 15 et 19 (ou selon ladite variante préférentielle de ce quatrième mode particulier de réalisation, ladite tige métallique 3 et ledit frein 18 (cf. Fig. 7)), et stoppant dès lors toute conduction électrique entre ledit frein 18 et ledit pendule 11 (ou selon ladite variante préférentielle, entre ledit frein 18 et ladite tige métallique 3). Le circuit est alors ouvert. Avantageusement, ledit aimant 16 est positionné dans le corps dudit pendule 11 de façon à ce qu'il se trouve en vis-à-vis de ladite première partie 181 dès qu'une oscillation dépasse ladite valeur seuil d'oscillation. Dans ce cas, lorsque ledit aimant 16 fait face à ladite première partie 181, leurs champs magnétiques respectifs ayant la même orientation, ledit aimant 16 et ladite première partie 181 s'attirent mutuellement, entraînant la rotation dudit frein 18 autour de sa rotule 17, et le contact des pistes de frottement 15 et 19 (ou selon la variante préférentielle, le contact dudit frein 18 avec ladite tige métallique 3 (cf. Fig. 8)), permettant une conduction électrique entre ledit frein 18 et ledit pendule 11 (ou selon la variante préférentielle, entre ledit frein 18 et ladite tige métallique 3). Le circuit électrique est alors fermé. Ladite conduction électrique entre ledit frein 18 et ledit pendule 11 (ou selon la variante préférentielle, entre ledit frein 18 et ladite tige métallique 3) permet par exemple de transmettre un signal de détection capable d'activer ladite électrovanne de limitation de freinage, tandis qu'une absence de contact entre ledit frein 18 et ledit pendule 11 (ou selon la variante préférentielle, entre ledit frein 18 et ladite tige métallique 3) stoppe la transmission dudit signal de détection, et désactive ladite électrovanne de limitation de freinage. Eventuellement, un autre aimant 161 pourrait être utilisé pour augmenter la force d'attraction entre ledit frein 18 et ledit pendule 11 lorsqu'une oscillation de ce dernier dépasse une valeur seuil d'oscillation. Par exemple, ledit autre aimant 161 pourrait avoir une orientation de la polarisation de son champ magnétique identique à l'orientation de la polarisation de ladite seconde partie et serait disposé, dans le corps dudit pendule, de façon à faire face à ladite seconde partie 182 uniquement lorsque une oscillation dudit pendule 11 dépasse ladite valeur seuil d'oscillation, la force d'attraction entre ledit autre aimant 161 et ladite seconde partie 161 étant négligeable lorsque ledit pendule 11 est au repos.

Selon un premier mode de réalisation de la variante préférentielle du quatrième mode particulier de réalisation, les pôles de l'aimant 16, et de l'aimant 161 si plusieurs aimants sont utilisés, sont inversés, de sorte que l'orientation de la polarisation produite par ledit aimant 16 attire ledit frein 18 lorsque le pendule est au repos, et repousse ledit frein 18 lorsqu'une oscillation dudit pendule dépasse une valeur seuil d'oscillation. Selon une seconde autre variante du quatrième mode particulier de réalisation, le contact métallique 3 est solidaire de l'arc de courbe dudit pendule 11, recouvrant l'intégralité de la longueur dudit arc de courbe.

La figure 9A et la figure 9B présentent deux exemples non limitatifs de réalisation du dispositif selon l'invention permettant un réglage d'une valeur seuil d'accélération. De manière générale, le dispositif de mesure de l'accélération du mobile selon l'invention comprend préférentiellement un système de réglage de la valeur seuil d'oscillation détectable par ledit système de détection. Le premier exemple (Fig. 9A) présente un pendule 11 comportant une fenêtre 13 dont la longueur (i.e. la distance entre l'emplacement 111 et l'autre emplacement 112) peut être variée au moyen dudit système de réglage, qui est par exemple dans ce cas, un système de fenêtre glissante comportant au moins une fenêtre glissante, préférentiellement une première fenêtre glissante 1111 destinée à modifier la position de l'emplacement 111 par rapport au corps du pendule, et une seconde fenêtre glissante 1121 destinée à modifier ledit autre emplacement 112 par rapport au corps du pendule. En modifiant la position dudit emplacement 111 et/ou 112 au moyen desdites fenêtres glissantes 1111, 1121, l'angle β varie, et par conséquence, la valeur seuil d'accélération détectable par le système de détection peut être modifiée.

La figure 9B montre un second exemple de réalisation dudit système de réglage permettant un réglage de la valeur seuil d'accélération détectable par le dispositif selon l'invention. Dans ce cas, la position dudit détecteur peut être modifiée par ledit système de réglage, par exemple par un système de vis micrométriques destiné au déplacement dudit détecteur dans un plan parallèle au plan d'oscillation du pendule 11, afin de modifier la position de détection par ledit détecteur dudit passage dudit premier milieu audit second milieu lorsque ladite oscillation est supérieure ou égale à ladite valeur seuil. Préférentiellement, ledit système de réglage est capable de déplacer conjointement ledit émetteur et ledit détecteur. Par exemple, ledit système de vis micrométriques comprend deux bases aptes à servir chacune de support audit émetteur et respectivement audit détecteur, lesdites bases pouvant être mues conjointement afin de déplacer conjointement ledit détecteur et ledit émetteur. En particulier, le corps dudit pendule 11 comprend une fenêtre 13 de forme sensiblement triangulaire, par exemple en forme de triangle isocèle, ladite fenêtre ayant un sommet positionné sur l'axe passant par le centre de masse du pendule au repos et le centre instantané de rotation O, et dont deux côtés rectilignes partant dudit sommet forment respectivement un angle θ>β et ϕ>β, avec ledit axe, en particulier θ = ϕ dans le cas dudit triangle isocèle, le troisième côté de la fenêtre étant curviligne et en particulier parallèle à l'arc de cercle du pendule lorsque ce dernier a ladite forme de secteur circulaire. L'émetteur du faisceau 14 et le détecteur peuvent en particulier être déplacés verticalement par ledit dispositif de réglage afin de faire varier la valeur seuil d'accélération détectable par le système de détection, la valeur de l'angle P' formé par l'intersection dudit axe et de la droite passant par le centre instantané de rotation O et la position dudit emplacement 111 (ou respectivement la position dudit autre emplacement 112) variant de manière continue entre 0° et β en fonction du déplacement vertical du faisceau à l'intérieur de ladite fenêtre de forme sensiblement triangulaire, permettant avantageusement une variation continue de la valeur seuil d'accélération détectable par ledit système de détection.

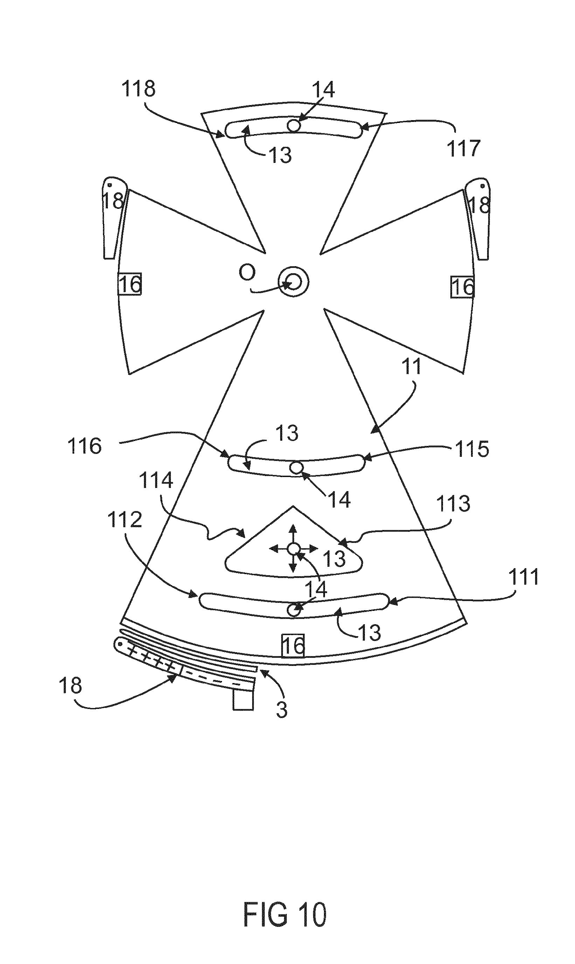

La figure 10 présente un exemple de réalisation selon l'invention dudit dispositif de mesure d'une accélération comprenant un système de détection sécurisé, en ce qu'il comprend plusieurs détecteurs destinés chacun à la détection d'un franchissement d'une valeur seuil d'oscillation différente, ou d'une même valeur seuil d'oscillation. Il peut s'agir par exemple d'une redondance de détecteurs destinés à détecter ledit franchissement de ladite valeur seuil d'oscillation, ou de différents types de détecteurs (photoélectrique, capacitif, inductif, par contact électrique), chacun destiné à détecter le franchissement d'une valeur seuil d'oscillation différente, ou de la même valeur seuil d'oscillation. Préférentiellement, ledit pendule comprend une ou plusieurs fenêtres 13 pouvant avoir les caractéristiques des fenêtres 13 décrites précédemment (par exemple, une fenêtre de forme sensiblement triangulaire, ou une fenêtre longiligne courbe) destinée chacune à interagir avec un faisceau 14 émis par un émetteur et destiné à détecté par un détecteur. Ainsi le nombre de fenêtres 13, le nombre de faisceaux 14, le nombre de détecteurs et le nombre d'émetteurs sont ainsi égaux afin que chaque fenêtre soit susceptible d'interagir avec son propre faisceau et son propre détecteur. Chaque fenêtre est en particulier apte à définir ledit premier emplacement 111, 113, 115, 117 et ledit autre emplacement 112, 114, 116, 118 selon l'invention, chacun desdites emplacements ou autre emplacement 111-118 étant apte à permettre la détection d'un même seuil d'oscillation et/ou d'un seuil d'oscillation différent. Chaque secteur circulaire dudit pendule peut en particulier être amorti par au moins un frein 18 mobile autour d'une rotule, chaque frein 18 étant destiné à amortir le pendule 11 lorsqu'une oscillation dépasse au moins une valeur seuil d'oscillation. Chaque secteur circulaire peut en particulier comprendre un ou plusieurs aimants 16 destinés chacun à interagir avec au moins un frein 18. Préférentiellement, au moins un frein 18 est configuré afin d'être repoussé par le champ magnétique d'au moins un desdites aimants 16 lorsque ledit pendule est au repos (cf. mécanisme décrit en Fig. 7), et pour être attiré par ledit champ magnétique dudit aimant 16 uniquement lorsqu'une oscillation dudit pendule dépasse une valeur seuil d'oscillation (cf. mécanisme décrit en Fig. 8), l'attraction dudit frein 18 par le champ magnétique dudit aimant 16 étant apte à provoquer un contact électrique entre ledit frein 18 et une tige métallique 3 courbe disposée en particulier entre ledit frein 18 et le corps dudit pendule 11, ledit contact électrique étant susceptible de fermer un circuit électrique connecté à un système de freinage, activant par exemple une électrovanne de limitation de freinage.

Préférentiellement, ledit pendule 11 est un pendule plan en forme de croix comportant quatre bras, chacun des bras de ladite croix faisant un angle de 90° avec les bras adjacents, et chaque bras étant en forme de secteur circulaire susceptible de comprendre, à son extrémité circulaire, une piste de frottement telle que décrite précédemment et destinée à coopérer avec une piste de frottement d'un frein 18 capable d'interagir avec elle. Préférentiellement, trois secteurs circulaires sont définis par un même rayon R1 et un même angle au sommet ω, et sont ainsi de taille sensiblement égale, et un quatrième secteur circulaire est défini par un rayon R2 > R1. Lesdits secteurs circulaires sont ainsi reliés entre eux en leur sommet afin de former ladite croix, le centre de rotation instantané O étant positionné à l'intersection desdits sommets desdits secteurs circulaires. Avantageusement, le pendule 11 tel que décrit en Fig. 10 permet de détecter le franchissement de différentes valeurs seuils d'oscillation au moyen des différents détecteurs et permet aussi de détecter le franchissement d'une même valeur seuil d'oscillation au moyen de plusieurs détecteurs, de façon à ce qu'une panne d'un détecteur et/ou d'un émetteur n'entraine pas une fausse détection d'un franchissement d'une valeur seuil d'oscillation.

Finalement, la présente invention ne se limite pas aux configurations géométriques décrites dans le présent document, et l'homme du métier saura adapter la forme dudit pendule, dudit frein, et la position dudit système de détection, en fonction de leurs propriétés physiques afin que le dispositif de mesure selon l'invention puisse signaler un franchissement d'une valeur seuil d'accélération par un mobile équipé dudit dispositif. Avantageusement, le dispositif selon l'invention permet au moins de signaler toute accélération caractérisable par un vecteur accélération sensiblement parallèle au plan d'oscillation dudit pendule et sensiblement perpendiculaire à la droite passant par le centre instantané de rotation O et son centre de masse lorsque le pendule est au repos. Ainsi, la présente invention permet en particulier d'identifier et de signaler un dépassement d'un niveau d'accélération longitudinale (i.e. parallèle à un chemin suivi par le mobile) d'un mobile de manière simple, en évitant une utilisation d'un système d'analyse électronique susceptible de tomber en panne, augmentant dès lors la fiabilité du signalement dudit dépassement.

En résumé, le dispositif selon l'invention présente plusieurs avantages par rapport aux dispositifs de mesure d'une accélération existants en ce que:
- le signal de détection généré par système de détection du dispositif selon l'invention peut être utilisé directement par des électrovannes de freinage, d'une manière libre de toute transformation ou traitement électronique, digital ou analogique;
- il prend en compte les effets de pente sur laquelle serait susceptible de se déplacer un mobile équipé dudit dispositif selon l'invention;
- l'amortissement dudit pendule par frottement sec ou champ magnétique n'est pas influencé par la température du système;
- il permet aussi une sécurisation de la détection du dépassement d'une valeur d'accélération par utilisation de systèmes de détection redondants (optique, inductif, capacitif, contact), augmentant dès lors la fiabilité du dispositif;
- ils sont de sécurité intrinsèque, car basés sur des phénomènes d'accélération et d'inertie;
- ils sont garants de mesures précises et reproductibles de dépassement d'une valeur seuil d'accélération pour ledit mobile: la précision et la reproductibilité du comportement sont déterminées par la géométrie du dispositif selon l'invention, qui est invariable dans le domaine de température envisagé (-40°C à +70°C);
- il permet un choix de matériaux facilement recyclable et non polluant pour l'environnement;
- il permet d'ajuster la valeur seuil d'accélération devant être détectée par exemple 2m/s², garantissant une grande plage opérationnelle;
- il est simple de conception, peu coûteux, utilisant peu de composants, lesdits composants conservant de plus leurs propriétés physiques sur une longue durée;
- une panne dudit dispositif n'entraîne pas obligatoirement un freinage d'urgence du mobile qu'il équiperait;
- les vibrations ont une action négligeable sur ledit dispositif selon l'invention.

## Revendications

1. Dispositif (1) de mesure d'une accélération d'un mobile, ledit dispositif comprenant:
- un pendule (11) capable d'osciller autour d'un centre instantané de rotation (O);
- un système de détection capable de détecter une oscillation dudit pendule (11) susceptible de résulter de ladite accélération;
- le pendule (11) a une configuration géométrique permettant sa coopération avec ledit système de détection, ladite configuration géométrique étant telle qu'elle permet uniquement audit système de détection de signaler une oscillation dudit pendule (11) dépassant une valeur seuil d'oscillation;
**caractérisé en ce qu'**il comprend un frein (18) destiné à amortir le pendule (11) lorsqu'une oscillation dépasse ladite valeur seuil.

2. Dispositif (1) de mesure selon la revendication 1, **caractérisé en ce que** ledit système de détection comprend un détecteur (132) disposé perpendiculairement à un plan d'oscillation dudit pendule (11).

3. Dispositif (1) de mesure selon une des revendications 1 ou 2, caractérisé en ce ledit système de détection comprend un émetteur (131).

4. Dispositif (1) de mesure selon une des revendications 1 à 3, **caractérisé en ce que** ladite configuration géométrique est telle que ledit pendule (11) comprend, à un emplacement (111) dudit pendule (11) destiné à se trouver en vis-à-vis dudit système de détection (132) lorsque ladite oscillation équivaut à ladite valeur seuil d'oscillation, une interface entre deux milieux, respectivement un premier milieu et un second milieu, seul un des deux milieux étant apte à coopérer avec ledit système de détection (132) afin de signaler le dépassement de ladite valeur seuil d'oscillation.

5. Dispositif (1) de mesure selon une des revendications précédentes, **caractérisé en ce qu'**il comprend un système de réglage de la valeur seuil d'oscillation détectable par ledit système de détection.

6. Dispositif (1) de mesure une des revendications 2 à 5, **caractérisé en ce que** le système de détection est sécurisé **en ce qu'**il comprend plusieurs détecteurs destinés chacun à la détection d'un franchissement d'une valeur seuil d'oscillation.

7. Dispositif (1) de mesure selon une des revendications 4 à 6, **caractérisé en ce que** ladite configuration géométrique est telle que ledit pendule (11) comprend, à un autre emplacement (112) dudit pendule (11) destiné à se trouver en vis-à-vis dudit système de détection (132) lorsque ladite oscillation équivaut à une autre valeur seuil, ladite interface entre lesdits deux milieux.

8. Dispositif (1) de mesure selon une des revendications 1 à 7, **caractérisé en ce que** ledit pendule (11) a une forme symétrique par rapport à un plan de symétrie passant par son centre de masse et le centre instantané de rotation (O), ledit plan de symétrie étant perpendiculaire au plan d'oscillation dudit pendule (11), ledit emplacement (111) et ledit autre emplacement (112) étant équidistants dudit plan de symétrie, et le même milieu s'étendant dudit premier emplacement (111) audit second emplacement (112).

9. Dispositif (1) de mesure selon une des revendications 5 ou 6 **caractérisé en ce que** ledit système de détection comprend un unique détecteur (132) et un unique émetteur (131), et que ladite configuration géométrique permet audit système de détection de signaler ledit dépassement de ladite valeur seuil d'oscillation et de ladite autre valeur seuil d'oscillation.

10. Dispositif (1) de mesure selon une des revendications 7 à 9, **caractérisé en ce que** ledit pendule (11) est un corps plan, et ledit même milieu s'étendant dudit premier emplacement (111) audit second emplacement (112) forme une fenêtre dans ledit corps plan.

11. Dispositif (1) selon la revendication 1 **caractérisé en ce que** ledit frein (18) est mobile autour d'une rotule (17).

12. Dispositif (1) selon une des revendications 1 à 11 **caractérisé en ce que** ledit frein (18) comprend une piste de frottement (19).

13. Dispositif (1) selon une des revendications 1 à 11 **caractérisé en ce que** ledit frein (18) comprend un aimant permanent.

14. Dispositif (1) selon la revendication 13 caractérisé en ce ledit frein (18) est un switch de déclenchement magnétique capable de détecter une oscillation du pendule (11).

## Patentansprüche

1. Vorrichtung (1) zur Messung einer Beschleunigung eines Fahrzeugs, umfassend:
- ein Pendel (11), das in der Lage ist, um einen Momentanpol (O) zu schwingen;
- ein Detektionssystem, das in der Lage ist, eine Schwingbewegung des Pendels (11), die aus der Beschleunigung resultieren kann, zu detektieren;
- wobei das Pendel (11) eine geometrische Gestalt hat, die sein Zusammenwirken mit dem Detektionssystem ermöglicht, wobei die geometrische Gestalt derart ist, dass sie es dem Detektionssystem nur ermöglicht, eine Schwingbewegung des Pendels (11) zu signalisieren, die einen Schwingungsschwellenwert überschreitet;
**dadurch gekennzeichnet, dass** sie eine Bremse (18) umfasst, die dazu bestimmt ist, dass Pendel (11) zu dämpfen, wenn eine Schwingbewegung den Schwellenwert überschreitet.

2. Vorrichtung (1) zur Messung nach Anspruch 1, **dadurch gekennzeichnet, dass** das Detektionssystem einen Detektor (132) umfasst, der senkrecht zu einer Schwingebene des Pendels (11) angeordnet ist.

3. Vorrichtung (1) zur Messung nach einem der Ansprüche 1 oder 2, **dadurch gekennzeichnet, dass** das Detektionssystem einen Emitter (131) umfasst.

4. Vorrichtung (1) zur Messung nach einem der Ansprüche 1 bis 3, **dadurch gekennzeichnet, dass** die geometrische Gestalt derart ist, dass das Pendel (11) an einem Ort (111) des Pendels (11), der dazu bestimmt ist, sich gegenüber dem Detektionssystem (132) zu befinden, wenn die Schwingbewegung dem Schwingungsschwellenwert entspricht, eine Grenzfläche zwischen zwei Medien, einem ersten Medium und einem zweiten Medium, umfasst, wobei nur eines der beiden Medien geeignet ist, mit dem Detektionssystem (132) zusammenzuwirken, um die Überschreitung des Schwingungsschwellenwerts zu signalisieren.

5. Vorrichtung (1) zur Messung nach einem der vorangehenden Ansprüche, **dadurch gekennzeichnet, dass** sie ein System zur Regelung des Schwingungsschwellenwerts umfasst, der von dem Detektionssystem detektiert werden kann.

6. Vorrichtung (1) zur Messung nach einem der Ansprüche 2 bis 5, **dadurch gekennzeichnet, dass** das Detektionssystem insofern gesichert ist, als es mehrere Detektoren umfasst, die jeweils zur Detektion einer Überschreitung eines Schwingungsschwellenwerts bestimmt sind.

7. Vorrichtung (1) zur Messung nach einem der Ansprüche 4 bis 6, **dadurch gekennzeichnet, dass** die geometrische Gestalt derart ist, dass das Pendel (11) an einem anderen Ort (112) des Pendels (11), der dazu bestimmt ist, sich gegenüber dem Detektionssystem (132) zu befinden, wenn die Schwingbewegung einem anderen Schwellenwert entspricht, die Grenzfläche zwischen den beiden Medien umfasst.

8. Vorrichtung (1) zur Messung nach einem der Ansprüche 1 bis 7, **dadurch gekennzeichnet, dass** das Pendel (11) eine in Bezug auf eine Symmetrieebene, die durch seinen Massenmittelpunkt und den Momentanpol (O) verläuft, symmetrische Form hat, wobei die Symmetrieebene senkrecht zur Schwingebene des Pendels (11) verläuft, der Ort (111) und der andere Ort (112) gleich weit von der Symmetrieebene entfernt sind und sich vom ersten Ort (111) bis zum zweiten Ort (112) dasselbe Medium erstreckt.

9. Vorrichtung (1) zur Messung nach einem der Ansprüche 5 oder 6, **dadurch gekennzeichnet, dass** das Detektionssystem einen einzigen Detektor (132) und einen einzigen Emitter (131) umfasst und dass die geometrische Gestalt es dem Detektionssystem ermöglicht, die Überschreitung des Schwingungsschwellenwerts und des anderen Schwingungsschwellenwerts zu signalisieren.

10. Vorrichtung (1) zur Messung nach einem der Ansprüche 7 bis 9, **dadurch gekennzeichnet, dass** das Pendel (11) ein flacher Körper ist und dass das Medium, das sich vom ersten Ort (111) bis zum zweiten Ort (112) erstreckt, in dem flachen Körper ein Fenster bildet.

11. Vorrichtung (1) nach Anspruch 1, **dadurch gekennzeichnet, dass** die Bremse (18) um ein Gelenk (17) beweglich ist.

12. Vorrichtung (1) nach einem der Ansprüche 1 bis 11, **dadurch gekennzeichnet, dass** die Bremse (18) eine Reibbahn (19) umfasst.

13. Vorrichtung (1) nach einem der Ansprüche 1 bis 11, **dadurch gekennzeichnet, dass** die Bremse (18) einen Permanentmagneten umfasst.

14. Vorrichtung (1) nach Anspruch 13, **dadurch gekennzeichnet, dass** die Bremse (18) ein magnetischer Auslöseschalter ist, der in der Lage ist, eine Schwingbewegung des Pendels (11) zu detektieren.

## Claims

1. Device (1) for measuring the acceleration of a moving body, said device including:
- a pendulum (11) capable of oscillating about an instantaneous centre of rotation (0);
- a detection system capable of detecting an oscillation of said pendulum (11) likely to result from said acceleration;
- the pendulum (11) has a geometric configuration enabling it to interact with said detection system, said geometric configuration being such that it only allows said detection system to indicate an oscillation of said pendulum (11) exceeding a threshold oscillation value;
**characterised in that** it includes a brake (18) intended to damp the pendulum (11) when an oscillation exceeds said threshold value.

2. Measuring device (1) according to claim 1, **characterised in that** said detection system includes a detector (132) arranged perpendicular to a plane of oscillation of said pendulum (11).

3. Measuring device (1) according to one of claims 1 or 2, **characterised in that** said detection system includes an emitter (131).

4. Measuring device (1) according to one of claims 1 to 3, **characterised in that** said geometric configuration is such that said pendulum (11) includes, at a position (111) of said pendulum (11) intended to be opposite said detection system (132) when said oscillation is equal to said threshold oscillation value, an interface between two media, respectively a first medium and a second medium, only one of the two media being capable of interacting with said detection system (132) in order to indicate that said threshold oscillation value has been exceeded.

5. Measuring device (1) according to one of the preceding claims, **characterised in that** it includes a system for adjusting the threshold oscillation value which can be detected by said detection system.

6. Measuring device (1) according to one of claims 2 to 5, **characterised in that** the detection system is backed up in that it includes several detectors each intended to detect that a threshold oscillation value has been exceeded.

7. Measuring device (1) according to one of claims 4 to 6, **characterised in that** said geometric configuration is such that said pendulum (11) includes, at another position (112) of said pendulum (11) intended to be opposite said detection system (132) when said oscillation is equal to another threshold value, said interface between said two media.

8. Measuring device (1) according to one of claims 1 to 7, **characterised in that** said pendulum (11) has a symmetrical shape with respect to a plane of symmetry passing through its centre of gravity and the instantaneous centre of rotation (0), said plane of symmetry being perpendicular to the plane of oscillation of said pendulum (11), said position (111) and said other position (112) being equidistant from said plane of symmetry, and a single medium extending from said first position (111) to said second position (112) .

9. Measuring device (1) according to one of claims 5 or 6 **characterised in that** said detection system includes a single detector (132) and a single emitter (131), and that said geometric configuration allows said detection system to indicate that said threshold oscillation value has been exceeded and said other threshold oscillation value has been exceeded.

10. Measuring device (1) according to one of claims 7 to 9, **characterised in that** said pendulum (11) is a flat body, and said single medium extending from said first position (111) to said second position (112) forms a window in said flat body.

11. Device (1) according to claim 1 **characterised in that** said brake (18) can move about a ball joint (17).

12. Device (1) according to one of claims 1 to 11 **characterised in that** said brake (18) includes a friction track (19).

13. Device (1) according to one of claims 1 to 11 **characterised in that** said brake (18) includes a permanent magnet.

14. Device (1) according to claim 13 **characterised in that** said brake (18) is a magnetic trigger switch capable of detecting an oscillation of the pendulum.
